# EUROPEAN PATENT APPLICATION

(11) **EP 4 362 599 A1**
(43) Date of publication of application: **01.05.2024**
(21) Application number: 22842412.3
(22) Date of filing: 12.07.2022
(51) Int. Cl.: H04W 76/11, H04L 67/141, H04W 88/08, H04W 88/12, H04W 92/12, H04L 101/30

(54) **DEVICE AND METHOD FOR TRANSFERRING IDENTIFIER IN WIRELESS COMMUNICATION SYSTEM**

(30) Priority: 13.07.2021 KR 20210091899
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KHO, Youngsung, Suwon-si, Gyeonggi-do 16677 (KR); LEE, Chungkeun, Suwon-si, Gyeonggi-do 16677 (KR)
(74) Representative: HGF
(86) International application number: PCT/KR2022/010096
(87) International publication number: WO 2023/287150

(57) **Abstract**

The present disclosure relates to a 5th (5G) generation or pre-5G communication system for supporting a higher data transmission rate beyond a 4th (4G) generation communication system such as long term evolution (LTE). According to embodiments of the present disclosure, a method performed by an E2 node may include transmitting an E2 setup request message to a radio access network (RAN) intelligent controller (RIC), and receiving an E2 setup response message from the RIC, the E2 setup request message may include a global identifier of the E2 node, the global identifier of the E2 node may include a global identifier of a next generation nodeB (gNB), and the global identifier of the E2 node may include identification information of a gNB-central unit (CU)-control plane (CP) or identification information of a gNB-CU.

## Description

### [Technical Field]

The present disclosure relates to an apparatus and a method for E2 node control by a radio access network intelligent controller (RIC) in a radio access network. The present disclosure relates to the apparatus and the method for controlling an E2 node through an E2 message conforming to an open radio access network (O-RAN) standard of a wireless communication system.

### [Background Art]

To satisfy a wireless data traffic demand which is growing after a 4th generation (4G) communication system is commercialized, efforts are exerted to develop an advanced 5th generation (5G) communication system or a pre-5G communication system. For this reason, the 5G communication system or the pre-5G communication system is referred to as a beyond 4G network communication system or a post long term evolution (LTE) system.

To achieve a high data rate, the 5G communication system considers its realization in an extremely high frequency (mmWave) band (e.g., such as a 60 gigabyte (60 GHz) band). To mitigate a path loss of propagation and to extend a propagation distance in the extremely high frequency band, the 5G communication system is discussing beamforming, massive multiple-input multiple-output (MIMO), full dimensional (FD)-MIMO, array antenna, analog beam-forming, and large scale antenna techniques.

Also, for network enhancement of the system, the 5G communication system is developing techniques such as evolved small cell, advanced small cell, cloud radio access network (RAN), ultra-dense network, device to device (D2D) communication, wireless backhaul, moving network, cooperative communication, coordinated multi-points (CoMP), and receive interference cancellation.

Besides, the 5G system is developing hybrid frequency shift keying and quadrature amplitude modulation (FQAM) and sliding window superposition coding (SWSC) as advanced coding modulation (ACM) schemes, and filter bank multi carrier (FBMC), non orthogonal multiple access (NOMA), and sparse code multiple access (SCMA) as advanced access technologies.

The 5G system, new radio or next radio (NR) is commercialized to satisfy demands for wireless data traffic, and provides a high data rate service to a user through the 5G system like 4G, and it is also expected that wireless communication services for various purposes such as internet of things and a service requiring high reliability for a specific purpose may be provided. Open radio access network (O-RAN) established by operators and equipment providers in a system where the current 4G communication system and the 5G system are used together defines a new network element (NE) and an interface standard based on the existing 3rd generation partnership project (3GPP) standard, and suggests an O-RAN structure.

### [Disclosure of Invention]

### [Solution to Problem]

According to embodiments of the present disclosure, a method performed by an E2 node may include transmitting an E2 setup request message to a radio access network (RAN) intelligent controller (RIC), and receiving an E2 setup response message from the RIC, the E2 setup request message may include a global identifier of the E2 node, the global identifier of the E2 node may include a global identifier of a next generation nodeB (gNB), and the global identifier of the E2 node may include identification information of a gNB-central unit (CU)-control plane (CP) or identification information of a gNB-CU. According to embodiments of the present disclosure, a method performed by a RIC may include receiving an E2 setup request message from an E2 node, and transmitting an E2 setup response message to the E2 node, the E2 setup request message may include a global identifier of the E2 node, the global identifier of the E2 node may include a global identifier of a gNB, and the global identifier of the E2 node may include identification information of a gNB-CU-CP or identification information of a gNB-CU.

According to embodiments of the present disclosure, an apparatus performed by an E2 node may include at least one transceiver and at least one processor, the at least one processor may be configured to transmit an E2 setup request message to a RIC, and receive an E2 setup response message from the RIC, the E2 setup request message may include a global identifier of the E2 node, the global identifier of the E2 node may include a global identifier of a gNB, and the global identifier of the E2 node may include identification information of a gNB-CU-CP or identification information of a gNB-CU.

According to embodiments of the present disclosure, an apparatus performed by a RIC may include at least one transceiver and at least one processor, the at least one processor may be configured to receive an E2 setup request message from an E2 node, and transmit an E2 setup response message to the E2 node, the E2 setup request message may include a global identifier of the E2 node, the global identifier of the E2 node may include a global identifier of a gNB, and the global identifier of the E2 node may include identification information of a gNB-CU-CP or identification information of a gNB-CU.

### [Advantageous Effects of Invention]

An apparatus and a method according to various embodiments of the present disclosure, may enable an E2 node to provide a radio access network (RAN) intelligent controller (RIC) with an identifier related to a central unit (CU) or a control plane (CU-CP), and thus enable the RIC to effectively control the E2 node, regardless of base station deployment. Effects obtainable from the present disclosure are not limited to the above-mentioned effects, and other effects which are not mentioned may be clearly understood by those skilled in the art of the present disclosure through the following descriptions.

### [Brief Description of Drawings]

FIG. 1 illustrates an example of a 4th generation (4G) long term evolution (LTE) core system.
FIG. 2A illustrates an example of a 5th generation (5G) non-standard alone (NSA) system.
FIG. 2B illustrates an example of architecture for an open-radio access network (O-RAN).
FIG. 3 illustrates a protocol stack of an E2 application protocol message in a radio access network according to embodiments of the present disclosure.
FIG. 4 illustrates an example of connection between a base station and a radio access network (RAN) intelligence controller (RIC) in a radio access network according to embodiments of the present disclosure.
FIG. 5 illustrates a configuration of a device in a radio access network according to embodiments of the present disclosure.
FIG. 6 illustrates logical functions related to E2 messages of an E2 node and a RIC in a radio access network according to embodiments of the present disclosure.
FIG. 7 illustrates function split examples between an E2 node and a RIC according to embodiments of the present disclosure.
FIG. 8 illustrates an implementation example of an E2 node and a RIC according to embodiments of the present disclosure.
FIG. 9 illustrates function split examples between a centralized unit (CU) and a RIC according to embodiments of the present disclosure.
FIG. 10 illustrates an example of mobility load balancing (MLB) control for different vendors according to embodiments of the present disclosure.
FIG. 11 illustrates an example of MLB control for different vendors according to embodiments of the present disclosure.
FIG. 12 illustrates an example of a problem of an E2 setup procedure according to a currently defined procedure.
FIGS. 13A and 13B illustrate a signaling example of an E2 setup procedure for providing an identifier according to embodiments of the present disclosure.
FIG. 14A and FIG. 14B illustrate an example of a method for providing an identifier for a central unit (CU) according to embodiments of the present disclosure.

### [Best Mode for Carrying out the Invention]

A method performed by an E2 node according to an embodiment of the present disclosure includes transmitting an E2 setup request message to a radio access network (RAN) intelligent controller (RIC), and receiving an E2 setup response message from the RIC, the E2 setup request message includes a global identifier of the E2 node, the global identifier of the E2 node includes a global identifier of a next generation nodeB (gNB), and the global identifier of the E2 node includes identification information of a gNB-central unit (CU)-control plane (CP) or identification information of a gNB-CU.

In an embodiment, the identification information of the gNB-CU-CP may include at least one of an ID number of the gNB-CU-CP or a name string of the gNB-CU-CP, and the identification information of the gNB-CU may include at least one of an ID number of the gNB-CU or a name string of the gNB-CU-CP.

A method performed by a RIC according to an embodiment of the present disclosure may include receiving an E2 setup request message from an E2 node, and transmitting an E2 setup response message to the E2 node, the E2 setup request message may include a global identifier of the E2 node, the global identifier of the E2 node may include a global identifier of a gNB, and the global identifier of the E2 node may include identification information of a gNB-CU-CP or identification information of a gNB-CU.

In an embodiment, the identification information of the gNB-CU-CP may include at least one of an ID number of the gNB-CU-CP or a name string of the gNB-CU-CP, and the identification information of the gNB-CU may include at least one of an ID number of the gNB-CU or a name string of the gNB-CU-CP.

An apparatus performed by an E2 node according to an embodiment of the present disclosure may include at least one transceiver and at least one processor, the at least one processor may be configured to transmit an E2 setup request message to a RIC, and receive an E2 setup response message from the RIC, the E2 setup request message may include a global identifier of the E2 node, the global identifier of the E2 node may include a global identifier of a gNB, and the global identifier of the E2 node may include identification information of a gNB-CU-CP or identification information of a gNB-CU.

In an embodiment, the identification information of the gNB-CU-CP may include at least one of an ID number of the gNB-CU-CP or a name string of the gNB-CU-CP, and the identification information of the gNB-CU may include at least one of an ID number of the gNB-CU or a name string of the gNB-CU-CP.

An apparatus performed by a RIC according to an embodiment of the present disclosure may include at least one transceiver and at least one processor, the at least one processor may be configured to receive an E2 setup request message from an E2 node, and transmit an E2 setup response message to the E2 node, the E2 setup request message may include a global identifier of the E2 node, the global identifier of the E2 node may include a global identifier of a gNB, and the global identifier of the E2 node may include identification information of a gNB-CU-CP or identification information of a gNB-CU.

In an embodiment, the identification information of the gNB-CU-CP may include at least one of an ID number of the gNB-CU-CP or a name string of the gNB-CU-CP, and the identification information of the gNB-CU may include at least one of an ID number of the gNB-CU or a name string of the gNB-CU-CP.

### [Mode for Carrying out the Invention]

Terms used in the present disclosure are used merely to describe specific embodiments, and may not intend to limit the scope of other embodiments. Singular expressions may include plural expressions unless the context clearly indicates otherwise. Terms used herein, including technical or scientific terms, may have the same meaning as those commonly understood by a person of ordinary skill in the technical field described in the present disclosure. Among the terms used in the present disclosure, terms defined in a general dictionary may be interpreted as having the same or similar meanings as those in the context of the related art, and unless explicitly defined in the present disclosure, may not be interpreted as ideal or excessively formal meanings. In some cases, even terms defined in the present disclosure may not be interpreted to exclude embodiments of the present disclosure.

A hardware-based approach will be described as an example in various embodiments of the present disclosure to be described hereafter. However, various embodiments of the present disclosure include technology which uses both hardware and software, and accordingly various embodiments of the present disclosure do not exclude a software-based approach.

The present disclosure provides an apparatus and a method for transmitting to a radio access network (RAN) intelligent controller (RIC) an ID of an E2 node to a near-RT RIC in a wireless communication system.

Hereafter, the preset disclosure relates to a control procedure between a device in a RAN and a device which controls the RAN in the wireless communication system. Specifically, the present disclosure relates to a procedure, a message, and a method for a RIC to transmit a RIC control request message to an E2 node on an E2 interface, and to identify whether the E2 node correctly performs or fails in RIC control request, and its reason if it fails in the RAN.

Terms for signals, terms indicating channels, terms indicating control information, terms indicating network entities, and terms indicating components of a device used in the following explanation are illustrated for convenience of description. Accordingly, the present disclosure is not limited to the terms to be described, and other terms having the same technical meaning may be used.

Also, in the present disclosure, to determine whether a specific condition is satisfied or fulfilled, expressions such as greater than or less than are used but are merely an expression by way of example, and do not exclude expressions of equal to or greater than or equal to or less than. A condition expressed as 'greater than or equal to' may be replaced by 'greater than', a condition expressed as 'less than or equal to' may be replaced by 'less than', and a condition expressed as 'greater than or equal to and less than' may be replaced by 'greater than and less than or equal to'.

In addition, the present disclosure describes various embodiments using terms used in some communication standard (e.g., 3rd generation partnership project (3GPP), open (O)-RAN)), but this is only an example for description. Various embodiments of the present disclosure may be easily modified and applied, in other communication systems.

As 4^{th} generation (4G)/5^{th} generation communication systems (e.g., new radio (NR)) are commercialized, differentiated service support is demanded for users in a virtualized network. The 3GPP is a joint research project among mobile communication related organizations, and aims to complete a 3G mobile communication system standard - applicable worldwide -within the scope of international mobile telecommunications (IMT)-2000 project of international telecommunication union (ITU). The 3GPP was established in December 1998, and the 3GPP standard is based on the advanced global system for mobile communications (GSM) standard, and includes radio and core networks, and service architecture all within the standardization scope. Accordingly, O-RAN has newly defined a radio unit (RU), a digital unit (DU), a central unit (CU)-control plane (CP) and a CU-user plane (UP) which are nodes constituting a 3GPP network entity (NE) and a base station as an O-RAN (O)-RU, an O-DU, an O-CU-CP, and an O-CU-UP respectively, and additionally standardized a near-real-time (NRT) RIC. The present disclosure is to support an operator specific service model in the E2 interface where the RIC requests a service from the O-DU, the O-CU-CP, or the O-CU-UP. Herein, the O-RU, the O-DU, the O-CU-CP, and the O-CU-UP may be understood as objects constituting the RAN which may operate according to the O-RAN standard, and may be referred to as E2 nodes. An interface with objects constituting the RAN which may operate according to the O-RAN standard between the RIC and the E2 nodes uses an E2 application protocol (AP). The RIC is a logical node for collecting information on a cell site transmitted and received between a user equipment (UE) and the O-DU, the O-CU-CP, or the O-CU-UP. The RIC may be implemented as a server centrally deployed in one physical location. The O-DU and the RIC, the O-CU-CP and the RIC, and the O-CU-UP and the RIC may be connected through Ethernet. For doing so, an interface standard for communications between the O-DU and the RIC, between the O-CU-CP and the RIC, and between the O-CU-UP and the RIC is required, and it is required to define a message standard such as E2-DU, E2-CU-CP, E2-CU-UP and a procedure between the O-DU, the O-CU-CP, the O-CU-UP and the RIC. In particular, differentiated service support is required for users in a virtualized network, and it is necessary to define message functions of E2-DU, E2-CU-CP and E2-CU-UP to support a service for wide cell coverage, by concentrating a call processing message/function generating in the O-RAN on the RIC.

The RIC may communicate with the O-DU, the O-CU-CP, and the O-CU-UP using the E2 interface, and may set an event occurrence condition by generating and transmitting a subscription message. Specifically, the RIC may set a call processing EVENT by generating an E2 subscription request message and transferring it to the E2 node (e.g., the O-CU-CP, the O-CU-UP, the O-DU). In addition, after setting the EVENT, the E2 node forwards a subscription request response message transferred to the RIC.

The E2 node may transmit a current state to the RIC through an E2 indication/report. The RIC may provide control for the O-DU, the O-CU-CP, and the O-CU-UP using an E2 control message. Various embodiments of the present disclosure suggest an E2 indication message for transmitting UE-based measurement information, for each period set in the subscription event condition at the O-DU. In addition, various embodiments of the present disclosure suggest a message for controlling a resource transmitted from the RIC to the O-DU.

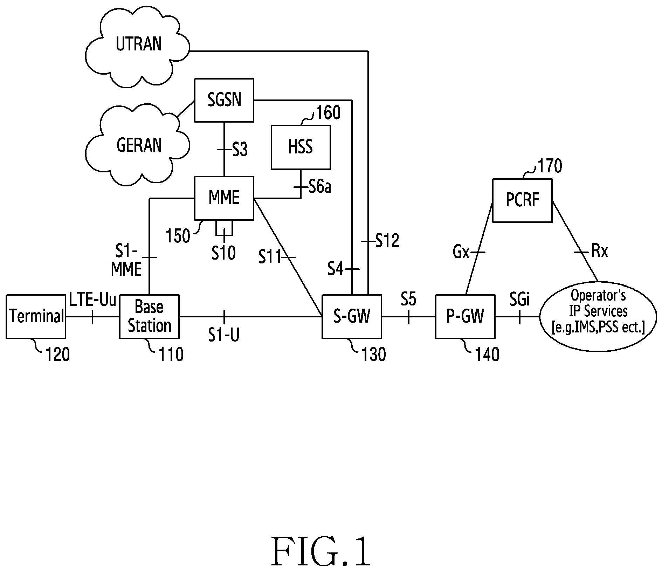

FIG. 1 illustrates an example of a 4G long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure for providing radio access to the terminal 120. For example, the base station 110 is a device which performs scheduling by collecting status information such as a buffer status, an available transmission power, and a channel status of the terminal 110. The base station 110 has coverage defined as a specific geographic region based on a signal transmission distance. The base station 110 is connected to the MME 150 through an S1-MME interface. Besides the base station, the base station 110 may be referred to as an 'access point (AP)', an 'eNodeB (eNB)', a 'wireless point', a 'transmission/reception point (TRP)' or other term having the equivalent technical meaning.

The terminal 120 is a device used by the user, and communicates with the base station 110 over a radio channel. In some cases, the terminal 120 may be operated without user's involvement. That is, at least one of the terminal 120 and the terminal 130 is a device which performs machine type communication (MTC), and may not be carried by the user. Besides the terminal, the terminal 120 may be referred to as a 'UE', a 'mobile station', a `subscriber station', a 'customer-premises equipment (CPE)', a 'remote terminal', a 'wireless terminal', or a 'user device' or other term having the equivalent technical meaning.

The S-GW 130 provides a data bearer, and generates or controls the data bearer under control of the MME 150. For example, the S-GW 130 processes a packet arriving from the base station 110 or a packet to be forwarded to the base station 110. In addition, the S-GW 130 may perform an anchoring role in handover of the terminal 120 between base stations. The P-GW 140 may function as a connection point to an external network (e.g., an internet network). In addition, the P-GW 140 allocates an internet protocol (IP) address to the terminal 120, and serves as an anchor for the S-GW 130. In addition, the P-GW 140 may apply quality of service (QoS) policy of the terminal 120, and manage accounting data.

The MME 150 manages mobility of the terminal 120. In addition, the MME 150 may perform authentication, bearer management, and the like on the terminal 120. That is, the MME 150 is responsible for mobility management and various control functions of the terminal. The MME 150 may interwork with a serving general packet radio service (GPRS) support node (SGSN).

The HSS 160 stores key information and a subscriber profile for the authentication of the terminal 120. The key information and the subscriber profile are transmitted from the HSS 160 to the MME 150 if the terminal 120 accesses the network.

The PCRF 170 defines a policy and a charging rule. The stored information is transmitted from the PCRF 180 to the P-GW 140, and the P-GW 140 may control the terminal 120 (e.g., QoS management, charging, etc.) based on the information provided from the PCRF 180.

Carrier aggregation (hereafter, 'CA') technology is a technology which combines a plurality of component carriers, and transmits and receives at one terminal a signal using the plurality of the component carriers at the same time and thus increases frequency use efficiency in terms of the terminal or the base station. Specifically, according to the CA technology, the terminal and the base station may transmit and receive signals using a broadband using the plurality of the component carriers in the uplink (UL) and the downlink (DL), wherein the component carriers are located in different frequency bands respectively. Hereafter, the UL indicates a communication link through which the terminal transmits a signal to the base station, and the DL indicates a communication link through which the base station transmits a signal to the terminal. At this time, the numbers of uplink component carriers and downlink component carriers may be different.

Dual connectivity or multi connectivity is a technology for increasing the frequency use efficiency in terms of the terminal or the base station, in which one terminal is connected to a plurality of different base stations and transmits and receives signals simultaneously using carriers within the plurality of the base stations positioned in different frequency bands. The terminal may be connected to a first base station (e.g., a base station which provides services using the LTE technology or the 4G mobile communication technology) and a second base station (e.g., a base station which provides services using the NR technology or 5G mobile communication technology) at the same time to transmit and receive traffic. In this case, frequency resources used by each base station may be positioned in different bands. As such, the operation scheme based on the dual connectivity scheme of the LTE and the NR may be referred to as 5G non-standalone (NSA).

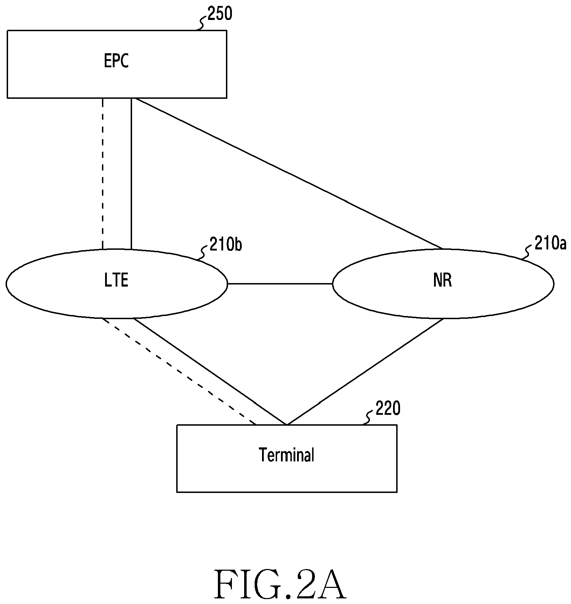

FIG. 2A illustrates an example of a 5G NSA system.

Referring to FIG. 2A, the 5G NSA system includes an NR RAN 210a, an LTE RAN 210b, a terminal 220, and an evolved packet core network (EPC) 250. The NR RAN 210a and the LTE RAN 210b are connected to the EPC 150, and the terminal 220 may be served by any one or both of the NR RAN 210a and the LTE RAN 210b at the same time. The NR RAN 210a includes at least one NR base station, and the LTE RAN 210b includes at least one LTE base station. Herein, the NR base station may be referred to as a '5G node', a 'next generation nodeB (gNB)' or other term having the equivalent technical meaning. In addition, the NR base station may have a structure divided into a CU and a DU, and the CU may also have a structure divided into a CU-CP unit and a CU-UP unit.

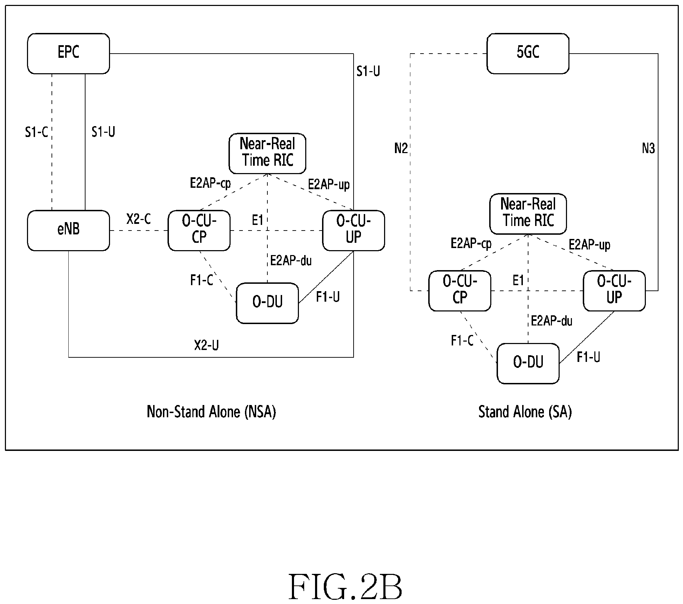

In the structure shown in FIG. 2, the terminal 220 may perform radio resource control (RRC) access through the first base station (e.g., a base station belonging to the LTE RAN 210b), and may be serviced with functions (e.g., connection management, mobility management, etc.) provided in the control plane. In addition, the terminal 220 may receive additional radio resources for transmitting and receiving data via a second base station (e.g., a base station belonging to the NR RAN 210a). This dual connectivity technology using the LTE and the NR may be referred to as evolved universal terrestrial radio access (E-UTRA)-NR (EN) -dual connectivity (DC). Similarly, the dual connectivity technology in which the first base station uses the NR technology and the second base station uses the LTE technology is referred to as NR-E-UTRA (NE)-DC. In addition, various embodiments may be applied to the multi connectivity and the CA technology of various types. In addition, various embodiments may be applicable even if a first system using a first communication technology and a second system using a second communication technology are implemented in one device or if the first base station and the second base station are located at the same geographic location.

FIG. 2B illustrates an architecture example for the O-RAN. For the sake of E2-SM-KPI monitoring (KPIMON) of an E2 service model, an O-RAN non-stand alone in the multi-connectivity operation using the E-UTRA and the NR radio access technology is considered, whereas the E2 node may be assumed to be in an O-RAN stand alone mode. Referring to FIG. 2B, in deployment of the O-RAN non-stand alone mode, the eNB is connected with the EPC through an S1-C/S1-U interface, and is connected with the O-CU-CP through an X2 interface. The O-CU-CP for the deployment of the O-RAN stand alone mode may be connected with a 5G core (5GC) through an N2/N3 interface.

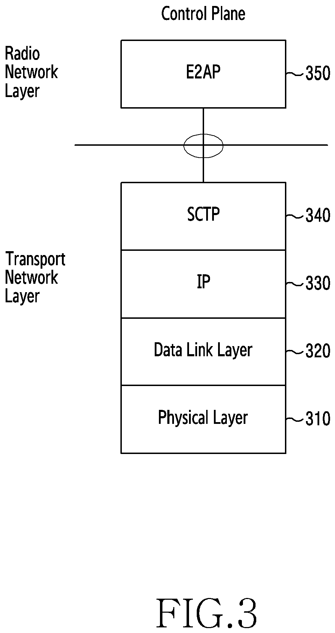

FIG. 3 illustrates a protocol stack of an E2 application protocol message in a RAN according to embodiments of the present disclosure. Referring to FIG. 3, a control plane includes a transport network layer and a radio network layer. The transport network layer includes a physical layer 310, a data link layer 320, an IP 330, and a stream control transmission protocol (SCTP) 340.

The radio network layer includes an E2AP 350. The E2AP 350 is used to deliver a subscription message, an indication message, a control message, a service update message, and a service query message, and is transmitted in a higher layer of the SCTP 340 and the IP 330.

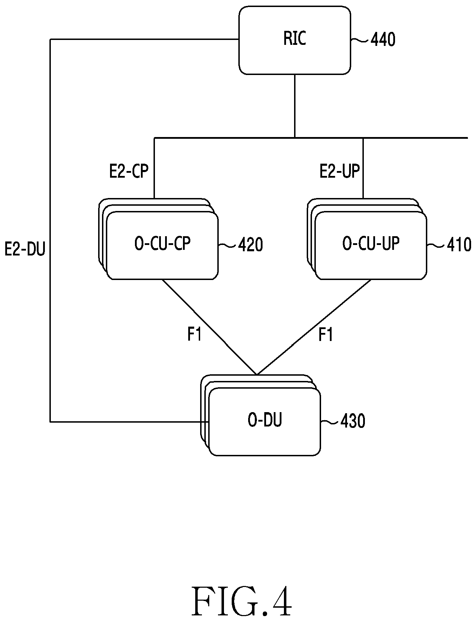

FIG. 4 illustrates an example of connection between a base station and a RIC in a radio access network according to embodiments of the present disclosure.

Referring to FIG. 4, an RIC 440 is connected to an O-CU-CP 420, an O-CU-UP 410, and an O-DU 430. The RIC 440 is a device for customizing RAN functionality for a new service or reginal resource optimization. The RIC 440 may provide functions such as network intelligence (e.g., policy enforcement, handover optimization), resource assurance (e.g., radio-link management, advanced self-organized-network (SON)), resource control (e.g., load balancing, slicing policy). The RIC 440 may communicate with the O-CU-CP 420, the O-CU-UP 410, and the O-DU 430. The RIC 440 may be connected to each node through E2-CP, E2-UP, and E2-DU interfaces. In addition, the interface between the O-CU-CP and the DU and between the O-CU-UP and the DU may be referred to as an F1 interface. In the following description, the DU and the O-DU, the CU-CP and the O-CU-CP, and the CU-UP and the O-CU-UP may be used interchangeably.

While FIG. 4 illustrates one RIC 440, a plurality of RICs may exist, according to various embodiments. The plurality of the RICs may be implemented with a plurality of hardware located at the same physical location or may be implemented through virtualization using single hardware.

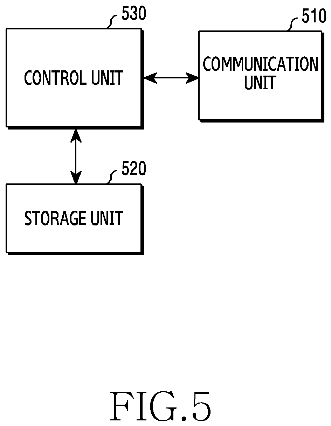

FIG. 5 illustrates a configuration of a device according to embodiments of the present disclosure. The structure illustrated in FIG. 5 may be understood as a configuration of a device having at least one function of the nera-RT RIC, the non-RT RIC, the O-CU-CP, the O-CU-UP, and the O-DU of FIG. 5. A term such as '...unit' or '...er' used hereafter indicates a unit for processing at least one function or operation, and may be implemented using hardware, software, or a combination of hardware and software.

Referring to FIG. 5, a core network device includes a communication unit 510, a storage unit 520, and a control unit 530.

The communication unit 510 provides an interface for performing communication with other devices in the network. That is, the communication unit 510 converts a bit string transmitted from the core network device to other device into a physical signal, and converts a physical signal received from other device into a bit string. That is, the communication unit 510 may transmit and receive signals. Accordingly, the communication unit 510 may be referred to as a modem, a transmitter, a receiver, or a transceiver. In this case, the communication unit 510 enables the core network device to communicate with other devices or systems via a backhaul connection (e.g., wired backhaul or wireless backhaul) or over the network.

The storage unit 520 stores data such as a basic program, an application program, and setting information for the operations of the core network device. The storage unit 520 may include a volatile memory, a nonvolatile memory, or a combination of a volatile memory and a nonvolatile memory. The storage unit 520 provides the stored data according to a request of the control unit 530.

The control unit 530 controls general operations of the core network device. For example, the control unit 530 transmits and receives signals through the communication unit 510. In addition, the control unit 530 records and reads data in and from the storage unit 520. For doing so, the control unit 530 may include at least one processor. According to various embodiments, the control unit 530 may control the device to carry out operations according to various embodiments explained in the present disclosure.

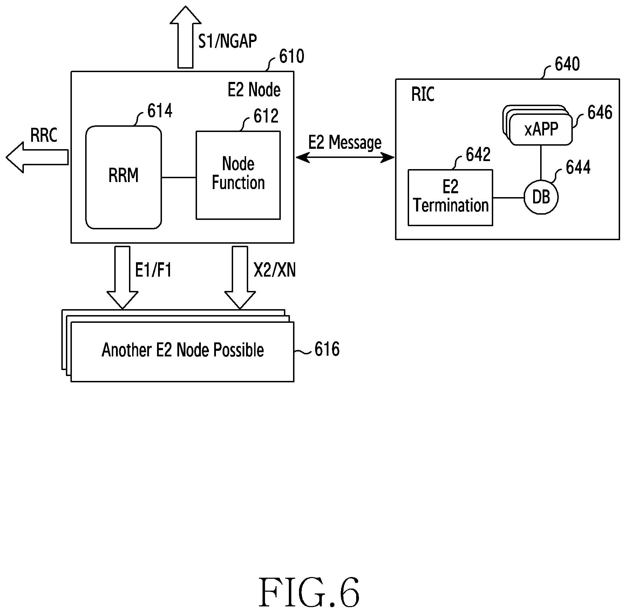

FIG. 6 illustrates logical functions related to E2 messages of an E2 node and a RIC in a RAN according to embodiments of the present disclosure.

Referring to FIG. 6, a RIC 640 and an E2 node 610 may transmit or receive an E2 message between them. For example, the E2 node 610 may be an O-CU-CP, an O-CU-UP, an O-DU, or a base station. A communication interface of the E2 node may be determined according to the type of the E2 node 610. For example, the E2 node 610 may communicate with another E2 node 616 through the E1 interface or the F1 interface. Alternatively, for example, the E2 node 610 may communicate with the E2 node 616 through an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 is a function corresponding to a specific xApp (application S/W) 646 installed in the RIC 640. For example, in the KPI monitor, KPI monitor collection S/W may be installed in the RIC 640, and the E2 node 610 may include the E2 node function 612 which generates KPI parameters, and then forwards an E2 message including the KPI parameters to an E2 termination 642 positioned at the RIC 640. The E2 node 610 may include a radio resource management (RRM) 614. The E2 node 610 may manage resources provided to the radio network for the terminal.

The E2 termination 624 positioned in the RIC 640, which is a termination of the RIC 640 for the E2 message, may perform a function of interpreting the E2 message forwarded by the E2 node 610 and then forwarding it to the xApp 646. A database (DB) 644 positioned in the RIC 640 may be used for the E2 termination 624 or the xApp 616. The E2 node 610 shown in FIG. 6 is a termination of at least one interface, and may be understood as a termination of messages transmitted to a terminal, a neighbor base station, and a core network.

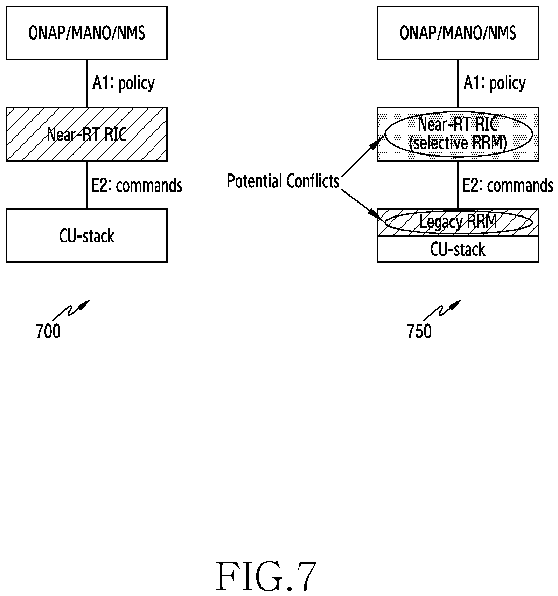

FIG. 7 illustrates function split examples between an E2 node and a RIC according to embodiments of the present disclosure. The O-RAN standard provides the function split between the E2 node and the RIC. For example, the E2 node may be the CU. The RIC may be the near RT RIC. The RIC may be connected to an open network automation platform (ONAP)/management and orchestration (MANO)/network management system (NMS) through the A1 interface. The RIC may be connected to the E2 node through the E2 interface. The E2 interface may transfer commands. The function split option may include function split 700 which manages the whole RRM at the near-RT RIC, and function split 750 which selectively manages the RRM at the near-RT RIC.

The near-RT RIC is to support the E2 as an open logical interface for the sake of a multi-vendor environment regardless of specific RRC-RRM algorithm implementation located at the nRT-RIC according to WG3 decision of 2019/01/16 meeting. The present disclosure may suggest an E2 service model radio interface control (E2SM-RIC) which pairs with E2SM-NI for injecting/modifying/configuring a per UE RRC message for each I/F and network entity (NE). In other words, the near RT RIC may be gradually improved from the function split 750 toward the function split 700. The E2 may advance to the open logical interface which is independent of specific RRC-RRM algorithm implementation in the near RT-RIC and aims at the multi-vendor environment.

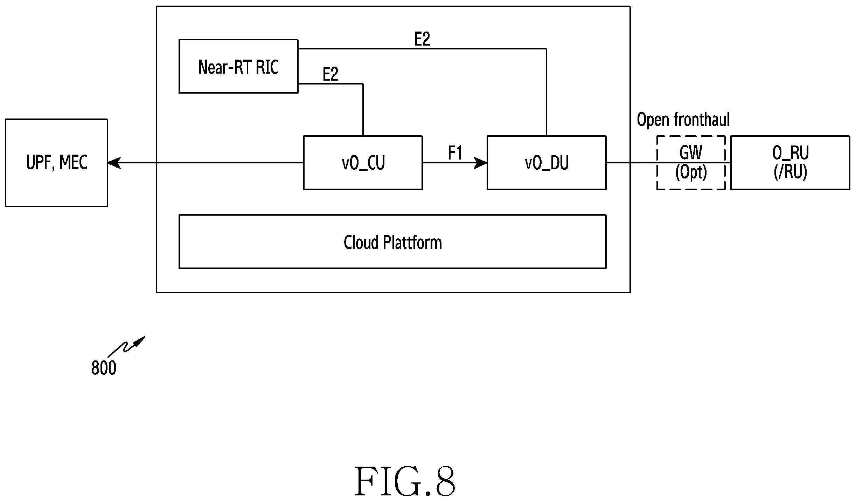

FIG. 8 illustrates an implementation example of an E2 node and a RIC according to embodiments of the present disclosure. In a scenario of an implementation example 800, the E2 node (e.g., an O-DU, an O-CU) and the RIC may be virtualized on a cloud platform (e.g., an open chassis and a blade spec edge cloud), and configured in a device (e.g., a server). This scenario may support distribution in an urban area crowded with abundant fronthaul capacity allowing a base band unit (BBU) function polled at a central location, with low latency enough to satisfy O-DU standby requirements. Hence, it may be unnecessary to attempt to centralize the RIC close to the RT over limits for centralizing the O-DU function. According to an embodiment, the E2SM-RIC may be optimized for the O-RAN distribution scenario which implements the near-RT RIC, the O-CU and the O-DU on the O-cloud platform.

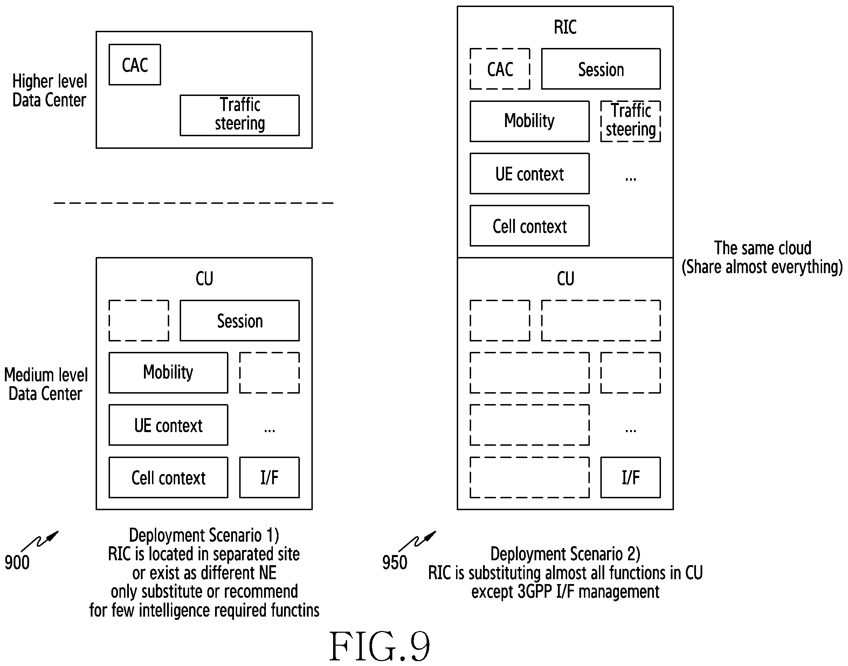

FIG. 9 illustrates function split examples between a CU and a RIC according to embodiments of the present disclosure. Referring to FIG. 9, the function splits may be performed according to a deployment scenario #1 900 or a function deployment scenario #2 950.

Deployment scenario #1 900 : The RIC may be located in a separate site or exist as a different NE, and substitutes or recommends few required intelligence functions.

Deployment scenario #2 950 : The RIC may substitute almost every function of the UE except 3GPP I/F management.

While FIG. 9 illustrates two scenarios, other scenarios may be applied. For example, the mobility function may be carried out by the RIC, rather than the CU, in the deployment scenario #1 900. Also, for example, the UE context may be carried out by the RIC, rather than the CU, in the deployment scenario #1 900. Also, for example, the session configuration function may be carried out by the RIC, rather than the CU, in the deployment scenario #1 900.

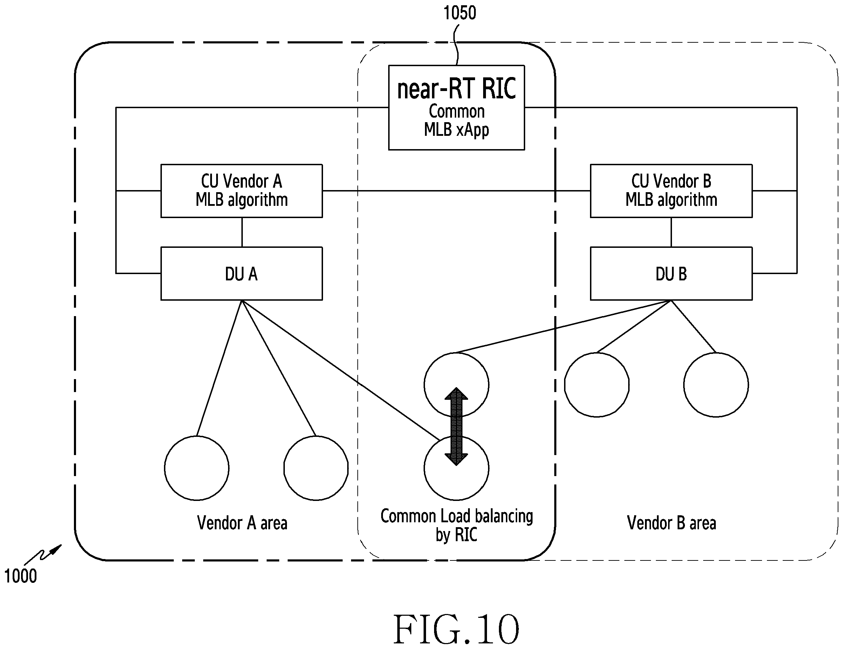

FIG. 10 illustrates an example of mobility load balancing (MLB) control for different vendors according to embodiments of the present disclosure. Such MLB may be conducted under RRM control. A first CU and a first DU may be provided by a vendor A. A second CU and a second DU may be provided by a vendor B. The first DU may provide a service area of the vendor A. RUs connected with the first DU may provide the service area of the vendor A. The second DU may provide a service area of the vendor B. RUs connected with the second DU may provide the service area of the vendor B.

If a UE moves, which cell is optimal may be performed through load balancing. If this load balancing is conducted by different vendors, it may be difficult to smoothly perform the load balancing in a space where the service areas of the vendors overlap. That is, an inter vendor zone or an inter CU-CP area may require interworking of the vendors. For the interworking of the vendors, the RRM control may require centralized execution. Hence, the RIC according to various embodiments of the present disclosure may be configured to perform the RRM. The RIC may not only receive measurement from each E2 node, but also generate a message for controlling each E2 node. The RIC may transmit a control message to each E2 node (e.g., the DU or the CU-CP, the CU-UP).

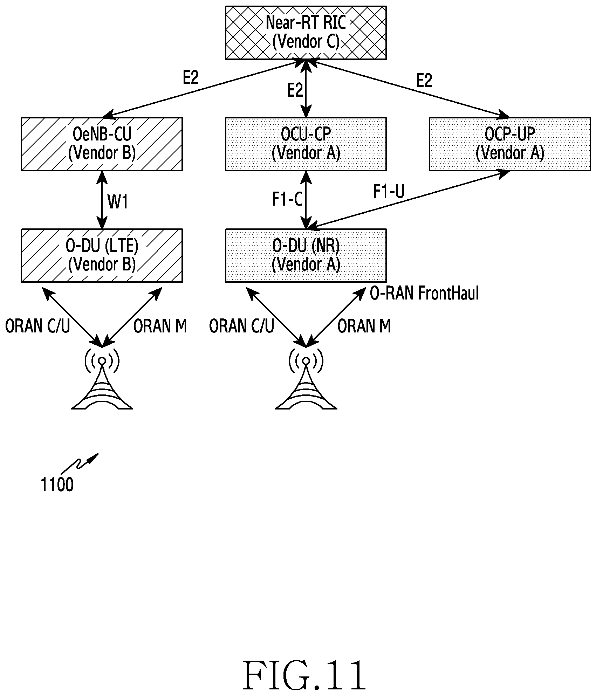

FIG. 11A illustrates an example of MLB control for different vendors according to embodiments of the present disclosure. First, unlike FIG. 11A, if a single vendor operates, RAN context may be identified at the near-RT RIC. In addition, trigger event/report, insert, policy conditions may operate. A control action may also operate, and a general subfunction definition approach may also operate. However, as shown in FIG. 11A, if multiple vendors operate, the RAN context may not be identified at the near-RT RIC. In addition, the trigger event/report, insert, policy conditions do not operate. The control action may not operate or may rely on the implementation, due to local RRM conflict.

The single E2SM-RAN control hardly operates in the O-RAN situation of the multi-vendor environment. There is because there are function parity and operation parity, considering all RAN features. The RAN function parity indicates a difference of features related to the RRM functions (e.g., QoS handover, load balancing (LB) handover, etc.). The RAN operation parity indicates a difference of features related to the RAN operations (e.g., an EN-DC SCG bearer change procedure). Besides, the REPORT/INSERT/CONTROL/POLICY actions may not identify accurate RAN CONTEXT. In addition, the REPORT/INSERT/CONTROL/POLICY actions may not identify trigger event/conditions according to the REPORT/INSERT/POLICY. In addition, it may be difficult to refer to the RAN context in a specific deployment in a corresponding action.

Referring to FIG. 11A, a wireless communication environment 1100 shows network entities configured through three vendors in total. The vendor A may be an NR provider. The vendor B may be an LTE provider. The vendor C may be a RIC provider. To address the above-stated problems, no matter which vender's E2 node is connected, one entity for managing all of them is required. Since the near-RT RIC may collect measurement information of different vendors, the near-RT RIC may more easily perform the management and the control than other entities. Hence, the near-RT RIC performs the RRM in the centralized manner, and thus difference and compatibility problems between the vendors may be addressed. Besides, the difference and compatibility problems between the vendors may be addressed, even with different RATs.

Hereafter, the centralized RRM by the near-RT RIC may be referred to and described as terms such as RIC-based RRM control or E2 node zombie mode, E2SM-RIC zombie mode, E2SM-RIC dedicated mode in the present disclosure. It is noted that the technical meaning that the function of each E2 node is performed by the RIC instead may be used in place of the illustrated terms.

According to RRM control of the RIC according to various embodiments of the present disclosure, IPC cost may be reduced. In particular, if the DU/CU/RIC are located in the same environment, costs for message relays may be reduced. By performing everything except for the message delivery, the RIC may address a reciprocity problem due to operations between the vendors. In addition, the intelligent function of the RIC may be upgraded, to replace a specific function between the DU and the CU-UPs.

The RIC is required to identify the E2 node ID, to control the E2 node. This ID of the E2 node may be a global identifier. That is, the global identifier may be used in the core network or the O-RAN network. That is, the global E2 node ID indicates the global identifier of the E2 node. For example, the global identifier of the E2 node may be defined as a global identifier of the eNB or the gNB. Also, for example, the global identifier of the E2 node may be defined as a local identifier of the CU-UP or the DU, which is required if the E2 node individually supports the E2 interface.

Hereinafter, embodiments of the present disclosure are described with an example of the E2 setup procedure, but embodiments of the present disclosure are not limited thereto. It is noted that the identifier providing method described in the embodiments of the present disclosure may be applied to at least any one of a reset procedure, an error indication, a RIC service update procedure, an E2 node configuration update procedure, and an E2 connection update procedure.

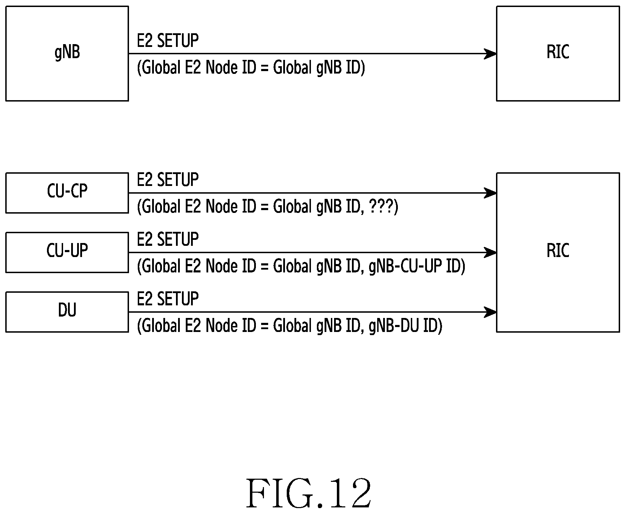

FIG. 12 illustrates an example of a problem of the E2 setup procedure according to a currently defined procedure. The base station may have integrated deployment or distributed deployment according to an implementation type (e.g., virtualization). According to an embodiment, the base station which is the gNB may have the integrated deployment in which the CU and the DU are configured together. According to another embodiment, the base station which is the gNB may have 2-split deployment in which the CU and the DU are separated. According to yet another embodiment, the base station which is the gNB may have 3-split deployment in which the CU-CP, the CU-UP, and the DU are separated.

Referring to FIG. 12, the gNB provides a global E2 node ID, if requesting the E2 setup from the RIC (e.g., a near RT RIC). According to an embodiment, the global E2 node ID may include a global gNB ID. If the gNB is integrated and provides only the global gNB ID, the RIC has no difficulty in identifying the E2 node. However, if the gNB has the 2-split deployment or the 3-split deployment rather than the integrated type, the RIC may have difficulty in solving only with the global gNB ID.

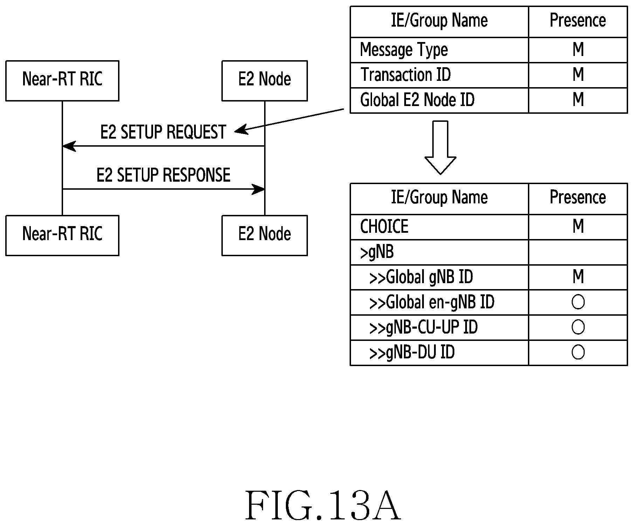

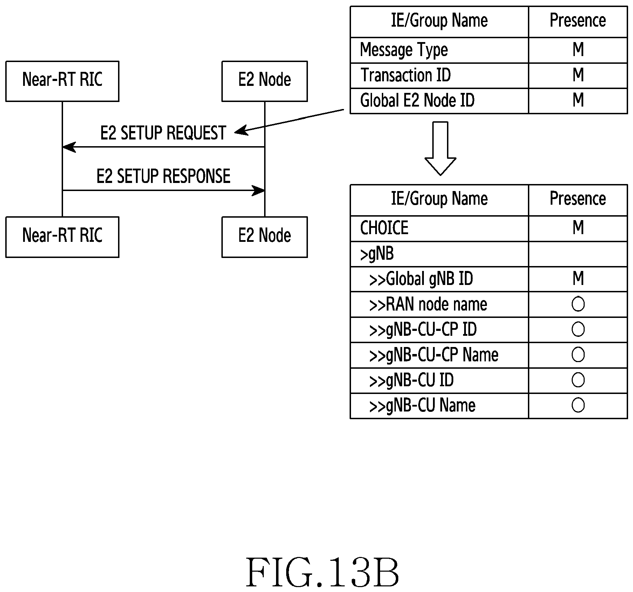

The 3-split deployment is assumed. The CU-UP may be connected to the RIC through the E2 interface. The CU-CP may transmit a gNB-CU-UP ID, if transmitting an E2 setup request message to the RIC. Hence, the RIC may identify the CU-UP which transmits the message. The DU may be connected to the RIC through the E2 interface. The DU may transmit a gNB-DU ID, if transmitting an E2 setup request message to the RIC. Thus, the RIC may identify the DU transmitting the message. However, since the current standard does not provide an identifier of the CU-CP, the RIC may not independently identify the CU-CP alone. Hereinafter, the problem of the standard shall be elucidated in FIG. 13A and FIG. 13B.

FIGS. 13A and 13B illustrate a signaling example of an E2 setup procedure for providing an identifier according to embodiments of the present disclosure. FIG. 13A describes the problem of the current standard, and FIG. 13B describes a solution of the present disclosure.

Referring to FIG. 13A and FIG. 13B, the E2 node may transmit an E2 setup request message to the near-RT RIC. The E2 setup request message may include a global E2 node ID. The E2 node may receive an E2 setup response message from the near-RT RIC. The E2 setup response message may include a global RIC ID.

As shown in FIG. 13A, according to the current standard, the global E2 node ID may include a global gNB ID, a global en-gNB ID, a gNB-CU-UP ID, and a gNB-DU ID. 'M' denotes mandatory including, and 'O' denotes optional including. The en-gNB indicates a gNB connected to the EPC. As mentioned above, since the current standard does not include the CU-CP ID, the RIC may not know individual CU-CPs and accordingly management may not be easy. In addition, in the 2-split deployment in which the CU-CP and the CU-UP are implemented together, the RIC may not be easy to manage because there is no identifier for identifying the individual CU. This problem may occur more frequently in a situation where a plurality of gNBs is virtualized in one CU. Embodiments of the present disclosure suggest identification information of the CU-CP or identification information of the CU, to solve this problem. The identification information may include an identifier ID or 'name'. As shown in FIG. 13B, the global E2 node ID may include at least one of a gNB-CU-CP ID, a gNB-CU-CP name, a gNB-CU ID, or a gNB-CU-name. 'M' denotes mandatory including, and 'O' denotes optional including.

If the base station, that is, a node providing the access network (e.g., an NG-RAN node) is configured in a heterogeneous architecture such as all-in-one deployment (or an aggregated deployment), 2-split deployment, or 3-split deployment, the RIC may not know what kind of service the E2 node may subscribe to. For example, F1-U may be used only for the split architecture but the E2 node may not know whether the E2 node function may include architecture related information. Accordingly, the embodiments of the present disclosure may help the RIC to understand the entire network topology, by explicitly indicating the architecture of the gNB to the RIC.

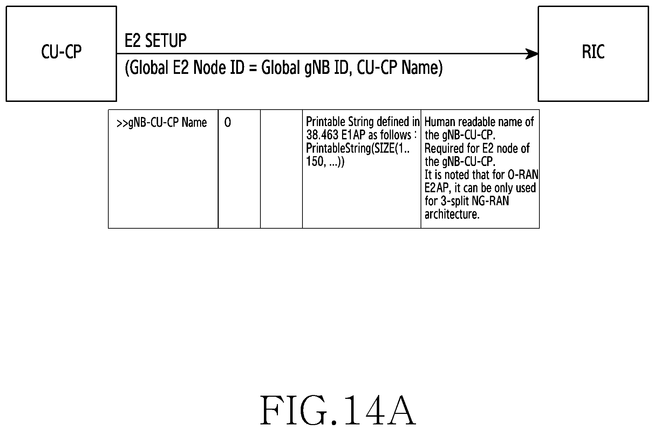

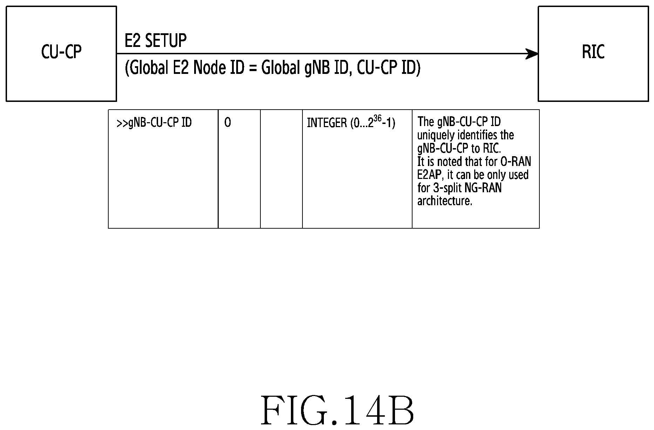

FIG. 14A and FIG. 14B illustrate an example of a method for providing an identifier for a CU according to embodiments of the present disclosure.

FIG. 14A illustrates an embodiment of providing identification information. The identification information may be provided in the form of the name. The CU-CP may include a gNB-CU-CP name in an E2 SEUP request message to the RIC. The CU-CP may transmit the E2 SEUP request message to the RIC. The name may be defined as a human-readable string. Although not depicted in FIG. 14A, the gNB-CU name may be used instead of the gNB CU-CP name in the 2-split deployment.

FIG. 14B illustrates an embodiment of providing the identification information. The identification information may be provided in the form of the ID, rather than the name. The CU-CP may include a gNB-CU-CP ID in the E2 SEUP request message to the RIC. Herein, the ID may indicate an identification number expressed with integers. Although not depicted in FIG. 14B, the gNB-CU ID may be used instead of the gNB CU-CP ID in the 2-split deployment.

The information mentioned in FIG. 14A and FIG. 14B may be added as shown in Table 2 below. Table 1 shows formats of the global E2 node ID of the current E2AP standard, and Table 2 shows formats of the global E2 node ID in the E2AP standard provided with the CU identifier according to embodiments of the present disclosure.

**[Table 1]**

| **IE/Group Name** | **Pre sen ce** | **R a n g e** | **IE type and reference** | **Semantics description** |
|---|---|---|---|---|
| CHOICE | M | | | |
| *>gNB* | | | | To be used when E2 Node supports gNB mode or both gNB and en-gNB modes |
| >>Global gNB ID | M | | 3GPP 38.413 clause 9.3.3.2 | Required when E2 node supports NR with gNB mode |
| >>Global en-gNB ID | O | | 3GPP 36.423 clause 9.2.112 | Required when E2 node supports NR with en-gNB mode |
| >>gNB-CU-UP ID | O | | 3GPP 38.463 clause 9.3.1.15 | Required when E2 Node of type gNB-CU-UP |
| >>gNB-DU ID | O | | 3GPP 38.473 clause 9.3.1.9 | Required when E2 Node of type gNB-DU |
| >en-gNB | | | | To be used when E2 Node supports en-gNB mode only |
| >>Global en-gNB ID | M | | 3GPP 36.423 clause 9.2.112 | |
| >>en-gNB-CU-UP ID | O | | 3GPP 38.463 clause 9.3.1.15 | Required when E2 Node of type gNB-CU-UP |
| >>en-gNB-DU ID | O | | 3GPP 38.473 clause 9.3.1.9 | Required when E2 Node of type gNB-DU |
| >*ng-eNB* | | | | To be used when E2 Node supports ng-eNB mode or both ng-eNB and eNB modes |
| >>Global ng-eNB ID | M | | 3GPP 38.423 clause 9.2.2.2 | Required when E2 Node supports E-UTRA with ng-eNB mode |
| >>Global eNB ID | O | | 3GPP 36.423 clause 9.2.22 | Required when E2 Node supports E-UTRA with eNB mode |
| >>ng-eNB-DU ID | O | | 3GPP 37.473 clause 9.3.1.9 | Required when E2 node of type ng-eNB DU |
| >eNB | | | | To be used when E2 Node supports eNB mode only |
| >>Global eNB ID | M | | 3GPP 36.423 clause 9.2.22 | |

**[Table 2]**

| **IE/Group Name** | **Pre sen ce** | **R a n g e** | **IE type and reference** | **Semantics description** |
|---|---|---|---|---|
| CHOICE | M | | | |
| *>gNB* | | | | To be used when E2 Node supports gNB mode or both gNB and en-gNB modes |
| >>Global gNB ID | M | | 3GPP 38.413 clause 9.3.1.6 | Required when E2 node supports NR with gNB mode. |
| | | | | This IE is identical to the leftmost bits of the NR cell identification IE included in the NR CGI IE of each cell provided by the gNB. |
| | | | | This IE may be used to globally identify the gNB. |
| >> RAN node name | O | | Printable String defined in 38.413 NGAP as follows: Printable String (SIZE(1..150, ...)) | Can be used for delivering human readable gNB name. It is alias of the Global gNB ID. |
| | | | | RAN mode name IE may indicate the (human-readable) name of the NG RAN node. |
| >>gNB-CU-CP ID | O | | INTEGER (0 .. 2³⁶-1) | The gNB-CU-CP ID uniquely identifies the gNB-CU-CP to RIC. |
| | | | | It is noted that for O-RAN E2AP, it can be only used for 3-split NG-RAN architecture. |
| >>gNB-CU-CP Name | O | | Printable String defined in 38.463 E1AP as follows: PrintableString(SIZE(1. .150,...)) | Human readable name of the gNB-CU-CP. |
| | | | | Required for E2 node of the gNB-CU-CP. |
| | | | | It is noted that for O-RAN E2AP, it can be only used for 3-split NG-RAN architecture. gNB-CU-CP Name IE may indicate the (human-readable) name of gNb-CU-CP. |
| >>gNB-CU ID | O | | INTEGER (0 .. 2³⁶-1) | The gNB-CU ID uniquely identifies the gNB-CU to RIC. It is noted that for O-RAN E2AP, it can be only used for 2-split NG-RAN architecture. |
| >>gNB-CU Name | O | | Printable String 38.473F1AP as follows: PrintableString(SIZE(1. .150,...)) | Human readable name of the gNB-CU. |
| | | | | Required for E2 node of the gNB-CU. |
| | | | | It is noted that for O-RAN E2AP, it can be only used for 2-split NG-RAN architecture. gNB-CU Name IE may indicate the (human-readable) name of the gNb-CU. |
| | | | | |
| >>Global en-gNB ID | O | | 3GPP 36.423 clause 9.2.112 | Required when E2 node supports NR with en-gNB mode The corresponding IE is identical to the leftmost bits of the NR cell identification IE included in the NR CGI IE of each cell provided by the en-gNB. |
| | | | | This IE can be used to globally identify the en-gNB. |
| >>gNB-CU-UP ID | O | | 3GPP 38.463 clause 9.3.1.15 | Required when E2 Node of type gNB-CU-UP. |
| | | | | The gNB-CU-UP ID may uniquely identify the gNB-CU-UP at least within the gNB-CU-CP. |
| >>gNB-DU ID | O | | 3GPP 38.473 clause 9.3.1.9 | Required when E2 Node of type gNB-DU. |
| | | | | The gNB-DU ID may uniquely identify a gNB-DU at least within a gNB-CU. |

A message transmitted to the RIC or transmitted from the RIC may include the global E2 node ID. The global E2 node identifier may include the identification information of the CU or the CU-CP. The identification information according to embodiments of the present disclosure may be in the form of an ID number or a name string.

According to an embodiment, the global E2 node identifier may include a gNB-CU-CP ID.

According to an embodiment, the global E2 node identifier may include a gNB-CU ID.

According to an embodiment, the global E2 node identifier may include a gNB-CU-CP name.

According to an embodiment, the global E2 node identifier may include a gNB-CU name.

According to an embodiment, the global E2 node identifier may include a gNB-CU-CP ID and a gNB-CU-CP name.

According to an embodiment, the global E2 node identifier may include a gNB-CU ID and a gNB-CU name.

According to an embodiment, the global E2 node identifier may include a gNB-CU ID, and a gNB-CU-CP name.

According to an embodiment, the global E2 node identifier may include a gNB-CU name, and a gNB-CU-CP ID.

According to an embodiment, the global E2 node identifier may include a gNB-CU name, and a gNB-CU-CP name.

According to an embodiment, the global E2 node identifier may include a gNB-CU ID, and a gNB-CU-CP ID.

According to an embodiment, the global E2 node identifier may include a gNB-CU ID, a gNB-CU-CP ID and a gNB-CU-CP name.

According to an embodiment, the global E2 node identifier may include a gNB-CU-CP ID, a gNB-CU ID and a gNB-CU name.

According to an embodiment, the global E2 node identifier may include a gNB-CU-CP ID, a gNB-CU ID, and a gNB-CU-CP name.

According to an embodiment, the global E2 node identifier may include a gNB-CU ID, a gNB-CU name, and a gNB-CU-CP ID.

According to an embodiment, the global E2 node identifier may include a gNB-CU name, a gNB-CU-CP name, a gNB-CU ID, and a gNB-CU-CP ID.

The RIC may obtain the CU-CP (3-split deployment) or the CU (2-split deployment), and then transmit an E2 setup request response message (or an E2 node configuration update confirmation) to the corresponding E2 node (i.e., the CU-CP or the CU). Next, the RIC may control the corresponding E2 node (i.e., the CU-CP or the CU), or provide a service to the E2 node.

FIG. 12 through FIG. 14C exemplify that the near RT RIC and the E2 node are separate nodes, but embodiments of the present disclosure are not limited thereto. According to an embodiment, the E2 node may be an O-CU-CP, and the O-CU-CP and the near RT RIC may be implemented in one single device. At this time, signaling between the O-CU-CP and the near RT RIC may be adopted as an internal operation or omitted. That is, embodiments of the present disclosure do not exclude an implementation where the near RT RIC is functionally included in CU equipment. That is, as such, a process in which the near RT RIC internally obtains the CU-CP or CU identifier may also be understood as an embodiment of the present disclosure.

The present disclosure has described the method for providing the ID of the CU or the CU-CP, as the ID of the E2 node transmitted to the RIC. The procedure described in the examples of the present disclosure is a procedure through the E2 interface, which aims at the near RT RIC, but does not exclude application to the non-RT RIC. That is, the non-RT RIC obtaining the identifiers (e.g., a gNB CU-CP name, a gNB CU-CP ID, a gNB-CU name, a gNB-CU ID) described in FIG. 12 through FIG. 14B may be also understood as an embodiment of the present disclosure.

The methods according to the embodiments described in the claims or the specification of the present disclosure may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the present disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, digital versatile discs (DVDs) or other optical storage devices, and a magnetic cassette. Alternatively, it may be stored to a memory combining part or all of those recording media. A plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the present disclosure through an external port. In addition, a separate storage device on the communication network may access the device which executes an embodiment of the present disclosure.

In the specific embodiments of the present disclosure, the components included in the present disclosure are expressed in a singular or plural form. However, the singular or plural expression is appropriately selected according to a proposed situation for the convenience of explanation, the present disclosure is not limited to a single component or a plurality of components, the components expressed in the plural form may be configured as a single component, and the components expressed in the singular form may be configured as a plurality of components.

Meanwhile, while the specific embodiment has been described in the detailed explanations of the present disclosure, it will be noted that various changes may be made therein without departing from the scope of the present disclosure.

## Claims

1. A method performed by an E2 node, comprising:
transmitting an E2 setup request message to a radio access network (RAN) intelligent controller (RIC); and
receiving an E2 setup response message from the RIC,
wherein,
the E2 setup request message includes a global identifier of the E2 node,
the global identifier of the E2 node includes a global identifier of a next generation nodeB (gNB), and
the global identifier of the E2 node includes identification information of a gNB-central unit (CU)-control plane (CP) or identification information of a gNB-CU.

2. The method of claim 1,
wherein the identification information of the gNB-CU-CP comprises at least one of an ID number of the gNB-CU-CP or a name string of the gNB-CU-CP, and
wherein the identification information of the gNB-CU comprises at least one of an ID number of the gNB-CU or a name string of the gNB-CU-CP.

3. A method performed by a radio access network (RAN) intelligent controller (RIC), comprising:
receiving an E2 setup request message from an E2 node; and
transmitting an E2 setup response message to the E2 node,
wherein,
the E2 setup request message includes a global identifier of the E2 node,
the global identifier of the E2 node includes a global identifier of a next generation nodeB (gNB), and
the global identifier of the E2 node includes identification information of a gNB-central unit (CU)-control plane (CP) or identification information of a gNB-CU.

4. The method of claim 3,
wherein the identification information of the gNB-CU-CP comprises at least one of an ID number of the gNB-CU-CP or a name string of the gNB-CU-CP, and
wherein the identification information of the gNB-CU comprises at least one of an ID number of the gNB-CU or a name string of the gNB-CU-CP.

5. An apparatus performed by an E2 node, comprising:
at least one transceiver; and
at least one processor,
wherein the at least one processor is configured to,
transmit an E2 setup request message to a radio access network (RAN) intelligent controller (RIC), and
receive an E2 setup response message from the RIC,
wherein,
the E2 setup request message includes a global identifier of the E2 node,
the global identifier of the E2 node includes a global identifier of a next generation nodeB (gNB), and
the global identifier of the E2 node includes identification information of a gNB-central unit (CU)-control plane (CP) or identification information of a gNB-CU.

6. The apparatus of claim 5,
wherein the identification information of the gNB-CU-CP comprises at least one of an ID number of the gNB-CU-CP or a name string of the gNB-CU-CP, and
wherein the identification information of the gNB-CU comprises at least one of an ID number of the gNB-CU or a name string of the gNB-CU-CP.

7. An apparatus performed by a radio access network (RAN) intelligent controller (RIC), comprising:
at least one transceiver; and
at least one processor,
wherein the at least one processor is configured to,
receive an E2 setup request message from an E2 node, and
transmit an E2 setup response message to the E2 node,
wherein
the E2 setup request message includes a global identifier of the E2 node,
the global identifier of the E2 node includes a global identifier of a next generation nodeB (gNB), and
the global identifier of the E2 node includes identification information of a gNB-central unit (CU)-control plane (CP) or identification information of a gNB-CU.

8. The apparatus of claim 3,
wherein the identification information of the gNB-CU-CP comprises at least one of an ID number of the gNB-CU-CP or a name string of the gNB-CU-CP, and
wherein the identification information of the gNB-CU comprises at least one of an ID number of the gNB-CU or a name string of the gNB-CU-CP.
